# EUROPÄISCHE PATENTSCHRIFT

(11) **EP 2 284 634 B1**
(45) Veröffentlichungstag und Bekanntmachung des Hinweises auf die Patenterteilung: **24.02.2021**
(21) Anmeldenummer: 10007996.1
(22) Anmeldetag: 30.07.2010
(51) Int. Cl.: G05B 23/02, G05B 15/02, F03D 7/04, F03D 17/00, G05B 19/042

(54) **Verfahren und Anordnung zur automatischen Konfigurationsparameterkontrolle bei Windenergieanlagen**
Method and assembly for automatic configuration parameter monitoring in wind energy assemblies
Procédé et agencement pour le contrôle de paramètres de configuration automatique dans des éoliennes

(30) Priorität: 12.08.2009 DE 102009037237
(43) Veröffentlichungstag der Anmeldung: 16.02.2011
(73) Patentinhaber: Senvion GmbH, 22297 Hamburg (DE)
(72) Erfinder: Sönnichsen, Björn, 24768 Rendsburg (DE); Peters, Sven, 24768 Rendsburg (DE)
(74) Vertreter: Glawe, Delfs, Moll

(56) Entgegenhaltungen:
- EP-A1- 2 058 717
- WO-A1-2006/119112
- WO-A2-2008/086801
- DE-A1- 10 203 775
- DE-A1- 10 222 296
- DE-A1- 10 222 297
- DE-A1- 19 923 735
- DE-A1-102007 027 849
- DE-A1-102007 053 078
- GB-A- 2 394 630
- US-A- 5 579 511
- US-A1- 2009 172 223

## Beschreibung

Die Erfindung betrifft Verfahren zur automatischen Konfigurationsparameterkontrolle bei Windenergieanlagen. Sie betrifft weiterhin eine Anordnung zur Durchführung des erfindungsgemäßen Verfahrens.

Bei der Errichtung von Windenergieanlagen werden in die Anlagensteuerung einer Windenergieanlage Konfigurationsparameter einprogrammiert, die zur Steuerung der Windenergieanlage genutzt werden und Einstellungen und Eigenschaften der Windenergieanlage bzw. deren Komponenten widerspiegeln. Durch entsprechende Konfigurationsparameter ist es möglich, die Windenergieanlage in ihrem optimalen Betriebszustand, d. h. mit maximalem Wirkungsgrad, zu betreiben. Alle Konfigurationsparameter einer Windenergieanlage lassen sich zu einem Konfigurationsparametersatz zusammenfassen. Die Konfigurationsparametersätze einzelner Windenergieanlagen unterscheiden sich in der Regel voneinander.

Im Stand der Technik ist es bekannt, dass bei Errichtung einer Windenergieanlage der Konfigurationsparametersatz manuell in die Anlagensteuerung der Windenergieanlage eingegeben wird. Während des Betriebs der Windenergieanlage wird der eingespeicherte Konfigurationsparametersatz durch einen Servicetechniker manuell überprüft und beim Auffinden von Fehlern korrigiert. Die manuelle Konfigurationsparameterkontrolle ist sehr zeitaufwendig und bei einer Vielzahl von Konfigurationsparametern in dem Konfigurationsparametersatz äußerst fehleranfällig. Aufgrund des Zeitaufwandes sind bei einer Vielzahl von zu kontrollierenden Windenergieanlagen die Überprüfungsintervalle für die einzelnen Windenergieanlagen häufig recht lang, so dass Fehleinstellungen einer Windenergieanlage ggf. erst spät erkannt werden und die Windenergieanlage suboptimal betrieben wird, wodurch sogar Schäden an der Windenergieanlage auftreten können.

Für computergesteuerte Werkzeugmaschinen ist bspw. aus den Dokumenten DE 199 23 735 A1 und EP 2 058 717 A1 bekannt, die momentane Konfiguration der austauschbaren Teile und Werkzeuge einer Werkzeugmaschine vor Durchführung eines Bearbeitungsprogramms mit der dafür vorgegebenen Soll-Konfiguration zu vergleichen, um die Gefahr eines Betriebs bei einer Fehlkonfiguration, welche zu Beschädigungen des Werkstücks und/oder der Werkzeugmaschine führen kann, zu reduzieren.

Auch ist bspw. aus Dokument DE 10 2008 053 78 A1 bekannt, dass bei einem dezentralen Automatisierungssystem auswechselbare Eingabe/Ausgabe-Erweiterungseinheiten vorgesehen sein können. Dabei soll anhand von Kodierungen der Erweiterungseinheiten die grundsätzliche Eignung einer Erweiterungseinheit für das System überprüft und gegebenenfalls eine automatisierte Konfiguration der Erweiterungseinheit vorgenommen werden können.

Das Dokument DE 10 2007 027 849 A1 beschreibt ein Verfahren zur Überwachung der Windbewegung um eine Windenergieanlage während der Durchführung von Montagearbeiten über einen physikalischen Zustand erfasst wird, der mit einem Grenzwert abgeglichen wird, um bei Überschreiten des Grenzwertes eine Windgeschwindigkeitswarnung auszugeben.

Der Erfindung liegt die Aufgabe zu Grunde, gegenüber dem bekannten Stand der Technik ein verbessertes Verfahren und eine verbesserte Anordnung zur Konfigurationsparameterkontrolle bei Windenergieanlagen zu schaffen.

Gelöst wird diese Aufgabe durch die Verfahren gemäß dem Hauptanspruch und dem nebengeordneten Verfahrensanspruch sowie durch eine Anordnung gemäß dem nebengeordneten Anordnungsanspruch. Vorteilhafte Weiterbildungen ergeben sich aus den abhängigen Ansprüchen.

Gemäß dem Hauptanspruch betrifft die Erfindung ein Verfahren zur automatischen Konfigurationsparameterkontrolle bei Windenergieanlagen, umfassend die Schritte:
a) Generieren eines Soll-Konfigurationsparametersatzes für eine Windenergieanlage;
b) Abspeichern des Soll-Konfigurationsparametersatzes in einer Datenbank;
c) automatisiertes Erfassen eines Ist-Konfigurationsparametersatzes der Windenergieanlage;
d) automatisiertes Vergleichen des Soll-Konfigurationsparametersatzes mit dem Ist-Konfigurationsparametersatz; und
e) Ausgeben einer Warnmeldung bei Abweichungen des Ist-Konfigurationsparametersatzes vom Soll-Konfigurationsparametersatz,
wobei zum Weiterbetrieb der Windenergieanlage ohne regelmäßige Ausgabe von Warnmeldungen der Vergleich des Soll-Konfigurationsparametersatzes mit dem Ist-Konfigurationsparametersatz zeitweise mit einem abweichenden Soll-Konfigurationsparametersatz durchgeführt wird.

Die Erfindung betrifft weiterhin eine Anordnung zur automatischen Konfigurationsparameterkontrolle bei Windenergieanlagen umfassend einen Server und wenigstens eine Windenergieanlage mit einer Kommunikationseinheit, wobei die Kommunikationseinheit zur Gewinnung von Ist-Konfigurationsparametern der Windenergieanlage als Ist-Konfigurationsparametersatz ausgebildet ist, auf einer dem Server zugeordneten Datenbank ein Soll-Konfigurationsparametersatz für die Windenergieanlage abgelegt ist und der Server, die Kommunikationseinheit und/oder die Anlagensteuerung ausgebildet ist, den Ist-Konfigurationsparametersatz mit dem Soll-Konfigurationsparametersatz zu vergleichen und bei Abweichungen des Ist-Konfigurationsparametersatzes vom Soll-Konfigurationsparametersatz eine Warnmeldung auszugeben, wobei der Server, die Kommunikationseinheit und/oder die Anlagensteuerung weiter ausgebildet ist, zum Weiterbetrieb der Windenergieanlage ohne regelmäßige Ausgabe von Warnmeldungen den Vergleich des Soll-Konfigurationsparametersatzes mit dem Ist-Konfigurationsparametersatz zeitweise mit einem abweichenden Soll-Konfigurationsparametersatz durchzuführen.

Bei "Konfigurationsparametern der Windenergieanlage" handelt es sich um einstellbare Werte, die bei der Steuerung einer Windenergieanlage durch die Anlagensteuerung berücksichtigt werden und die sowohl die mechanische Konfiguration als auch den Funktionsumfang der Steuerung beschreiben. Mithin soll unter "Konfigurationsparametern der Windenergieanlage" die Gruppe von einstellbaren Größen der Windenergieanlage verstanden werden, die die Eigenschaften der Windenergieanlage in der Steuerung beschreibt. Hierbei kann es sich sowohl um numerische Werte (wie die Angabe der Höhe des Turms der Windenergieanlage, um kritische Eigenfrequenzen bestimmen und im Betrieb vermeiden zu können) und/oder um digitale Angaben, die ein Vorhandensein oder Fehlen bestimmter Baugruppen (z. B. extralange Rotorblätter für Schwachwindstandorte) oder Funktionen (z. B. eine spezielle "schallarme Betriebsart") beschreiben, handeln. Allgemein gesagt beschreiben die Konfigurationsparameter in kodierter Form die Ausrüstung der Windenergieanlage. Die einzelnen Konfigurationsparameter sind zweckmäßigerweise so aufeinander abgestimmt, dass die Windenergieanlage nahe ihrem optimalen Betriebszustand, d.h. mit maximalem Wirkungsgrad, arbeitet. Mit Konfigurationsparametern sind hier keine Größen gemeint, die im Rahmen von Regelvorgängen als dynamisch veränderliche Größen, wie z. B. Führungs-, Regel- oder Störgröße während des Regelbetriebs Verwendung finden.

Bei den "Soll-Konfigurationsparametern" handelt es sich um solche Konfigurationsparameter, mit denen die Windenergieanlage arbeiten soll, um einen zuverlässigen, störungsfreien Betrieb zu gewährleisten. Die "Ist-Konfigurationsparameter" sind die Konfigurationsparameter, mit denen die Windenergieanlage tatsächlich arbeitet. Die Ist-Konfigurationsparameter sind in der Regel konstant und werden nur von extern durch den Hersteller oder Wartungsbetriebe verändert (zum Beispiel bei Änderungen in der Ausstattung bzw. der aktivierten Funktionen der Windenergieanlage). Es soll aber nicht völlig ausgeschlossen sein, dass die Konfigurationsparameter ggf. durch die Anlagensteuerung selbst verändert werden, z. B. bei durch Plausibilitätsalgorithmen erkannter Fehlkodierung; es handelt sich dann um eine selbst einstellende Anlagensteuerung.

Abweichungen zwischen Ist-Konfigurationsparametern und Soll-Konfigurationsparametern führen dazu, dass die Windenergieanlage nicht in der gewünschten Weise arbeitet. Abweichungen zwischen Soll-Konfigurationsparametern und Ist-Konfigurationsparametern können z.B. durch fehlerhafte Eingabe der Konfigurationsparameter in die Anlagensteuerung, aufgrund von Softwarefehler der Anlagensteuerung, wodurch Konfigurationsparameter unbeabsichtigt verändert werden oder durch Selbsteinstellung der Anlagensteuerung auftreten.

Der Begriff "Windenergieanlage" steht für eine Anlage, bei der aus Wind elektrischer Strom erzeugt wird. Dabei wird in der Regel ein an einer Gondel, die sich auf einem Mast befindet, angebrachter Rotor durch den Wind in Rotation versetzt. Der Rotor treibt einen Generator an, der die mechanische Energie in elektrische Energie umwandelt. Die elektrische Energie wird mit Hilfe eines Umrichters und/oder eines Transformators so angepasst, dass sie in ein Stromnetz eingespeist werden kann. Die einzelnen Komponenten der Windenergieanlage werden dabei durch eine Anlagensteuerung gesteuert.

Im Zusammenhang mit Windenergieanlagen kommen häufig auch so genannte "Grid Stations" und "Meteo Stations" zum Einsatz. Sind mehrere Windenergieanlagen in einem Windpark zusammengefasst, ist es üblich, die Windenergieanlagen mit einem windpark-internen elektrischen Netz zu verbinden und dieses windpark-interne Netz über einen Transformator mit dem allgemeinen Stromnetz zu verbinden, dem sogenannten Einspeisepunkt. Am Einspeisepunkt des Windparks in das allgemeine Stromnetz müssen die Anforderungen des Betreibers des allgemeinen Stromnetzes hinsichtlich Spannung, Frequenz und Phasenlage der eingespeisten Leistung erfüllt sein. Dazu werden von der Grid Station am Einspeisepunkt die relevanten elektrischen Größen gemessen, Vorgabewerte des Betreibers des öffentlichen Stromnetzes empfangen und Sollwerte an die einzelnen Windenergieanlagen übermittelt. Außerdem ist es möglich, eine meteorologische Messstation (sog. "Meteo Station") vorzusehen, die Wetterinformationen misst, insbesondere Windrichtung und Windstärke, so dass daraus Verfügbarkeitswerte, Leistungskurven und zu erwartende Leistungsabgabe für alle Windenergieanlagen des Windparks ermittelt werden können. Sowohl bei Grid Stations als auch Meteo Stations sind in der Regel Anlagensteuerungen vorgesehen, deren Funktionsweise durch Konfigurationsparameter angepasst werden können und die sich demnach zur Anwendung der erfindungsgemäßen Verfahren eignen.

Mit dem Begriff "Server" ist eine funktionelle Einheit bezeichnet, die auch mehrere physische Rechnereinheiten umfassen kann. Bspw. kann ein Vergleich von Ist- mit Soll-Konfigurationsparametern und/oder die Ausgabe von Abweichungen auf eine von der für die Kommunikation mit der Anlagensteuerung vorgesehene Rechnereinheit getrennten Einheit des Servers durchgeführt werden.

Auch die Anlagensteuerung der Windenergieanlage kann auf mehrere Komponenten aufgeteilt sein, bspw. eine Hauptsteuereinheit, einen Pitch-Controller und/oder eine Umrichter-Steuereinheit. Die Eigenschaften der einzelnen Komponenten der Anlagensteuerung können dann ebenfalls in Form von Konfigurationsparametern in einem Konfigurationsparametersatz abgebildet sein.

Indem erfindungsgemäß vorgesehen ist, dass der Vergleich des Ist- mit dem Soll-Konfigurationsparametersatz nicht mehr manuell durchgeführt wird, wird eine potentielle Fehlerquelle vermieden und das Risiko, dass eine Windenergieanlage mit falschen und damit nicht-optimalen Konfigurationsparametern betrieben wird, wird verringert. Indem außerdem die Konfigurationsparameterkontrolle automatisiert durchgeführt wird und somit keine Arbeitszeit von teuren Spezialisten erfordert, kann die Konfigurationsparameterkontrolle kostengünstig und vor allem in kürzeren Intervallen durchgeführt werden. Die Intervalle sind besser planbar und werden dank Automatisierung besser eingehalten. Die Betriebssicherheit und nicht zuletzt auch der Ertrag können so konsequent optimiert werden. Zusätzlich wird vermieden, dass schnell erkannt wird, ob die Windenergieanlage mit Konfigurationsparametern betrieben wird, die für die jeweilige Windenergieanlage mit ihren Umgebungsbedingungen nicht gewünscht sind.

In einem ersten Schritt werden die Soll-Konfigurationsparameter generiert. Dabei ist es möglich, die Soll-Konfigurationsparameter für jede Windenergieanlage neu zu erstellen. Es ist aber auch möglich, dass Soll-Konfigurationsparameter einer ersten Windenergieanlage in die Soll-Konfigurationsparameter einer zweiten, baugleichen Windenergieanlage kopiert werden oder für jede vorkommende Variante der Windenergieanlage eine Konfigurationsparametersatzvorlage hinterlegt ist, aus der die passende ausgewählt wird.

Bevorzugt ist es, dass die Soll-Konfigurationsparameter aus Default-Parametern für die Windenergieanlage, Komponenten-Parameter für in der Windenergieanlage verbaute Komponenten und Optionsparameter für in der Windenergieanlage vorgesehene Optionen gewonnen werden. Bei den Default-Parametern handelt es sich um solche Konfigurationsparameter, die für eine Windenergieanlage einer Serie typisch sind, bspw. der Rotordurchmesser, die Turmhöhe oder die Netzfrequenz (50 oder 60 Hz). Innerhalb einer Serie können jedoch Komponenten von unterschiedlichen Herstellern bzw. Zulieferern verwendet werden, die ggf. unterschiedliche Einstellungen benötigen. Dies kann durch die Komponenten-Parameter repräsentiert werden. Letztlich besteht noch die Möglichkeit, dass die Windenergieanlage zusätzliche oder alternative Optionen aufweist. Bei Optionen handelt es sich in der Regel um besondere Konfigurationen der Anlagensteuerung, die bspw. dazu dienen die Windenergieanlage an die lokalen Anforderungen des öffentlichen Netzbetreibers anzupassen oder bspw. Auflagen hinsichtlich der Schallemission zu erfüllen. Optionen können mittels Software in der Anlagensteuerung realisiert werden und/oder können der Definition des gewünschten Betriebsverhaltens dienen. Durch Optionen ist es bspw. möglich, dass die Anlagensteuerung den Betrieb der Windenergieanlage nicht im Hinblick auf den maximalen Wirkungsgrad der Windenergieanlage, sondern auf minimale akustische Emissionen hin optimiert wird, indem besonders schallemissive Betriebspunkte vermieden werden. Optionen können allein durch Berücksichtigung während der Generierung der Konfigurationsparameter für die einzelnen Komponenten der Windenergieanlage Eingang in die Anlagensteuerung finden. Es ist aber auch möglich, dass gesonderte Options-Parameter in den Konfigurationsparametersatz aufgenommen werden, die dann von der Anlagensteuerung während des Betriebes berücksichtigt werden oder dass Options-Parameter bestimmte Funktionen in der Anlagensteuerung aktivieren, die normalerweise nicht aktiviert sind.

Die Generierung des Soll-Konfigurationsparametersatzes kann bspw. mittels Software erfolgen, wobei in die Software der Anlagentyp, die verbauten Komponenten und die Optionen angegeben werden und daraufhin ein Satz an Soll-Konfigurationsparametern generiert wird, der auf die Default-, Komponenten- und Options-Parameter basiert. Bereits durch die automatisierte Generierung eines Soll-Konfigurationsparametersatzes werden potentielle Inkompatibilitäten, wie sie bei einer manuellen Erstellung des Soll-Konfigurationsparametersatzes gemäß dem Stand der Technik vorkommen können, vermieden. So können Konfigurationsparametersätze bzw. dadurch auftretende kritische Betriebszustände, die bspw. zu ungewollten Resonanzschwingungen im Turm der Windenergieanlage führen, sicher vermieden werden.

Der generierte Soll-Konfigurationsparametersatz wird in einer Datenbank abgespeichert. Die Datenbank kann bei der Anlagensteuerung oder einem Server angeordnet sein. Der Server kann wiederum an der Windenergieanlage selbst oder an einem von dieser entfernten Ort angeordnet sein. Im letzteren Fall ist es bevorzugt, wenn die Kommunikation zwischen Windenergieanlage und dem Server über das Internet erfolgt, so dass Konfigurationsparameter zwischen Server und Anlagensteuerung oder eine weitere Komponente der Windenenergieanlage, bspw. eine Kommunikationseinheit, ausgetauscht werden können. Die Anlagensteuerung oder die Kommunikationseinheit ist in der Lage, von der Anlagensteuerung momentan verwendete Konfigurationsparameter zu einem Ist-Konfigurationsparametersatz zusammenzustellen. Der Vergleich zwischen Ist- und Soll-Konfigurationsparametersatz kann durch die Anlagensteuerung, den Server oder eine zusätzliche, dazu ausgebildete Vergleichskomponente durchgeführt werden. Bevorzugt ist es, wenn der Vergleich auf dem Server durchgeführt wird. Für den Vergleich kann jeder einzelne Konfigurationsparameter aus dem Ist-Konfigurationsparametersatz mit dem entsprechenden Wert des Soll-Konfigurationsparametersatzes verglichen werden. Es sind aber auch andere, bspw. statistische Methoden denkbar.

Es ist möglich, dass es sich bei dem Server um einen zentralen Server handelt, der die Soll-Konfigurationsparametersätze von mehreren Windenergieanlagen vorhält.

Der Vergleich des Ist-Konfigurationsparametersatzes mit dem Soll-Konfigurationsparametersatz kann in festgelegten Intervallen erfolgen. Es ist auch möglich, dass der Vergleich zwischen Soll- und Ist-Konfigurationsparametern auf Anfrage, bspw. des Servers und/oder der Anlagensteuerung, erfolgt. Darüber hinaus ist es auch möglich, dass der Vergleich bei vorgegebenen Ereignissen stattfindet, insbesondere wenn sich der Ist-Konfigurationsparametersatz ändert, die Anlage erstmalig in Betrieb geht, die Anlage gewartet wurde und/oder die Software der Anlagensteuerung aktualisiert wurde.

Wird eine Abweichung des Ist- von dem Soll-Konfigurationsparametersatz festgestellt, wird eine Warnmeldung ausgegeben. Die Warnmeldung kann an einer mit dem Server oder der Anlagensteuerung verbundenen Ausgabeeinheit, bspw. einem Drucker oder einem Bildschirm, ausgegeben werden. Es ist jedoch auch möglich, dass bei Feststellung einer Abweichung eine entsprechende Nachricht versendet wird, wobei die Nachricht bspw. per Email oder einem anderen netzwerkgestützten Nachrichtendienst versendet werden kann. Auch ist eine Eintragung der Abweichung in eine Liste möglich, die bspw. über das Internet einsehbar ist.

Es ist dabei vorgesehen, dass der Vergleich des Soll-Konfigurationsparametersatzes mit dem Ist-Konfigurationsparametersatz zeitweise mit abweichendem Soll-Konfigurationsparametersatz durchgeführt wird. Ein zeitweise veränderter Soll-Konfigurationsparametersatz ist bspw. dann erforderlich, wenn eine Komponente der Windenergieanlage beschädigt oder ausgefallen ist. Die Windenergieanlage kann bis zum Austausch der betroffenen Komponente weiter betrieben werden, wobei sich in der Regel der Ist-Konfigurationsparametersatz ändert. Indem der dem erfindungsgemäßen Vergleich zugrunde liegende Soll-Konfigurationsparametersatz zeitweise verändert wird, kann die Windenergieanlage weiter betrieben werden, ohne dass es regelmäßig zu einer Warnmeldung kommt. Wird eine Abweichung zwischen Ist- und Soll-Konfigurationsparametersatz festgestellt, kann die Windenergieanlage auch gedrosselt oder still gesetzt werden, insbesondere dann, wenn die Abweichungen bei kritischen Konfigurationsparametern festgestellt wird.

Es ist möglich, dass der Soll-Konfigurationsparametersatz über die Lebensdauer der Windenergieanlage variiert wird. Damit können zum einen neue Erkenntnisse beim Betrieb von Windenergieanlagen, zum anderen Verschleißerscheinungen bei Komponenten der Windenergieanlage berücksichtigt werden.

Bevorzugt ist es, wenn der Soll-Konfigurationsparametersatz, der Ist-Konfigurationsparametersatz und/oder die Abweichung zwischen Soll- und Ist-Konfigurationsparametersatz über die Lebensdauer der Windenergieanlage archiviert werden. Die archivierten Daten können dann statistisch ausgewertet werden, um zu neuen Erkenntnissen zum optimalen Betrieb einer Windenergieanlage zu gelangen.

Die erfindungsgemäße Anordnung zur automatischen Konfigurationsparameterkontrolle bei Windenergieanlagen ist zur Durchführung des erfindungsgemäßen Verfahrens ausgebildet. Es wird daher auf die vorstehenden Erläuterungen verwiesen.

Die Erfindung wird nun anhand einer vorteilhaften Ausführungsform unter Bezugnahme auf die beigefügte Zeichnung beispielhaft beschrieben. Es zeigen:

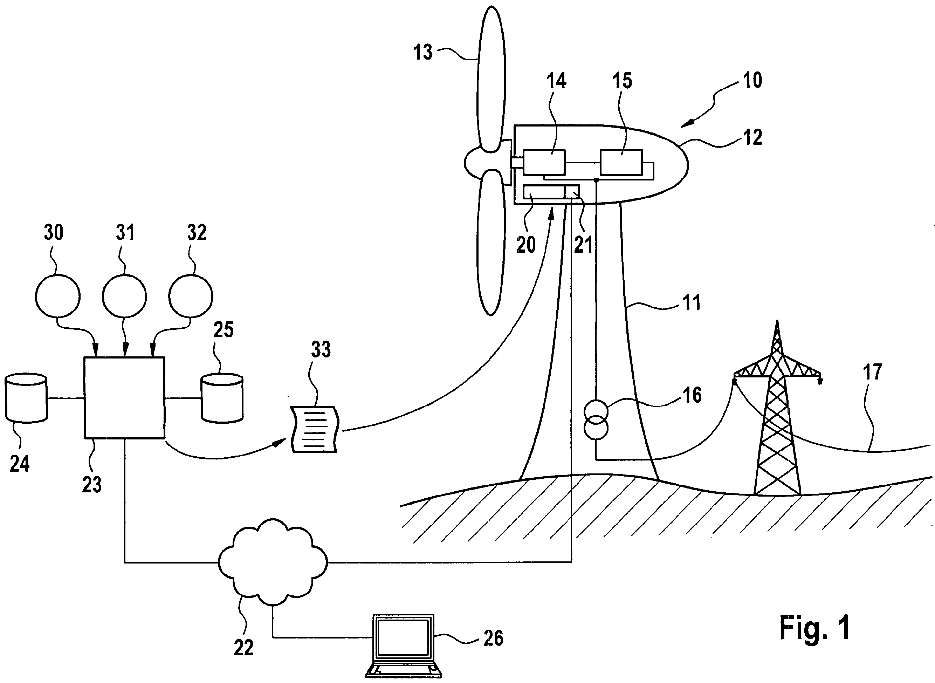

- Fig. 1:: eine schematische Darstellung einer erfindungsgemäßen Anordnung zur automatischen Parameterkontrolle bei Windenergieanlagen.

Die Windenergieanlage 10 umfasst zur Umwandlung von Windenergie in elektrische Energie einen an einer drehbar auf einem Turm 11 gelagerten Gondel 12 befestigten Rotor 13, der einen Generator 14 antreibt. Die vom Generator 14 kommende elektrische Leistung wird zumindest teilweise über einen Umrichter 15 und einen Transformator 16 so umgewandelt, dass sie in ein Hoch- oder Mittelspannungsnetz 17 eingespeist werden kann. Die Umwandlung erfolgt so, dass die elektrische Leistung hinsichtlich der Spannungsamplitude, Frequenz und Phasenverschiebung den Anforderungen des Hoch- oder Mittelspannungsnetzes 17 genügt.

Zur Steuerung der Windenergieanlage 10 ist eine Anlagensteuerung 20 vorgesehen, die über nicht dargestellte Steuerleitungen mit einzelnen Komponenten der Windenergieanlage verbunden ist. Die Anlagensteuerung 20 kann so auf die Komponenten der Windenergieanlage 10 einwirken, dass die Windenergieanlage 10 an einem gewünschten Betriebspunkt betrieben wird. Der Betriebspunkt kann bspw. im Hinblick auf größtmögliche Energieeffizienz, auf möglichst geringe Lärmemissionen oder allgemein hinsichtlich der Einhaltung eines windgeschwindigkeitsabhängigen Drehzahl-/Drehmomentbereichs gewählt werden. Die Anlagensteuerung 20 steuert die Windenergieanlage 10 anhand von Konfigurationsparametern, die in einem Konfigurationsparametersatz zusammengefasst werden können.

Die Anlagensteuerung 20 verfügt über eine Kommunikationseinheit 21, die mit dem Internet 22 verbunden ist. Die Anlagensteuerung 20 bzw. die Kommunikationseinheit 21 ist in der Lage, die momentan von der Anlagensteuerung 20 verwendeten Konfigurationsparameter zu einem Ist-Konfigurationsparametersatz zusammenzufassen und über das Internet 22 zu versenden.

Ebenfalls mit dem Internet 22 verbunden ist ein Server 23, der den Ist-Konfigurationsparametersatz der Windenergieanlage 10 empfangen kann. Alternativ ist es möglich, dass der Server 23 an der Windenergieanlage 10 angeordnet und direkt mit der Anlagensteuerung 20 oder der Kommunikationseinheit 21 verbunden ist.

Wird eine Windenergieanlage 10 errichtet, so muss in deren Anlagensteuerung 20 ein Konfigurationsparametersatz eingegeben werden, nach der die Windenergieanlage 10 nach Inbetriebnahme gesteuert werden soll.

Dazu werden in den Server 23 verschiedene Informationen über die Windenergieanlage 10 eingegeben. Bei diesen Informationen handelt es sich unter anderem um erste Kodierwertblöcke 30 über den Typ der Windenergieanlage 10, die bspw. Informationen über den Durchmesser des Rotors 13 oder die Höhe des Turms 11 umfassen. Daneben werden noch zweite Kodierwertblöcke 31 über die in der Windenergieanlage 10 verbauten Komponenten, wie z.B. den Generator 14, den Umrichter 15 oder den Transformator 16, in den Server 23 eingegeben. Letztlich ist es noch möglich, dem Server 23 dritte Kodierwertblöcke 32 über für die Windenergieanlage 10 gewünschte Optionen zur Verfügung zu stellen. Beispielsweise kann eine Option ausgewählt werden, wonach die Windenergieanlage 10 so gesteuert wird, dass schallkritische Betriebsbereiche vermieden und/oder bestimmte Schallpegel nicht überschritten werden. Es ist auch möglich, dass eine Option ausgewählt wird, wonach die Windenergieanlage 10 die elektrische Leistung mit einem vorgebbaren Phasenwinkel in das Hoch- oder Mittelspannungsnetz einspeist.

Der Server 23 bezieht dann aus einer dem Server zugeordneten Datenbank 24 verschiedene abgespeicherte Parameter, die der Konfiguration der Windenergieanlage 10 entsprechen, die sich aus den Kodierwertblöcken 30-32 ergibt. Diese einzelnen Parameter werden anschließend zu einem Soll-Konfigurationsparametersatz zusammengefasst. Es ist möglich, dass die einzelnen Parameter aus der Datenbank beim Zusammenfassen zum Soll-Konfigurationsparametersatz in einem vorgegebenen Bereich variiert werden. Der so generierte Soll-Konfigurationsparametersatz wird in einer zweiten, dem Server 23 zugeordneten Datenbank 25 abgespeichert.

Außerdem wird der Soll-Konfigurationsparametersatz ausgedruckt. Mit Hilfe des Ausdrucks 33 kann ein Servicetechniker den Soll-Konfigurationsparametersatz in die Anlagensteuerung 20 eingeben. Die Anlagensteuerung 20 wird die Windenergieanlage 10 dann anhand des eingegebenen Konfigurationsparametersatzes betreiben.

In regelmäßigen Abständen sendet der Server 23 eine Anfrage an die Anlagensteuerung 20 bzw. deren Kommunikationseinheit 21. Daraufhin werden die momentan von der Anlagensteuerung 20 verwendeten Konfigurationsparameter zu einem Ist-Konfigurationsparametersatz zusammengestellt und über die Kommunikationseinheit 21 und das Internet 22 an den Server 23 gesendet.

Sobald der Server 23 den Ist-Konfigurationsparametersatz der Windenergieanlage 10 erhält, lädt er den Soll-Konfigurationsparametersatz der Windenergieanlage 10 aus der Datenbank 25 und vergleicht den Ist- mit dem Soll-Konfigurationsparametersatz.

Sollte der Server 23 Abweichungen von Ist- zum Soll-Konfigurationsparametersatz feststellen, wird eine Warnmeldung ausgegeben. Abweichungen können bspw. dann entstehen, wenn dem Servicetechniker bei der Eingabe der Konfigurationsparameter in die Anlagensteuerung ein Fehler unterlaufen ist oder die Anlagensteuerung selbst einstellend ausgeführt ist und die Konfigurationsparameter aufgrund besonderer Ereignisse, wie z.B. Ausfall einer Komponente, oder fehlerhafter Programmierung verändert hat. Werden von den Soll-Konfigurationsparametern abweichende Parameter zur Steuerung der Windenergieanlage 10 verwendet, kann dies zu Beschädigungen an der Windenergieanlage 10 führen. Zumindest wird die Windenergieanlage 10 aber nicht mehr an dem gewünschten Betriebspunkt betrieben.

Die Warnmeldung wird in Form einer Email über das Internet 22 ausgegeben. Ein Servicetechniker kann von einem mit dem Internet 22 verbundenen Terminal 26 die Warnmeldung abrufen und sich des Problems annehmen.

## Patentansprüche

1. Verfahren zur automatischen Konfigurationsparameterkontrolle bei Windenergieanlagen, umfassend die Schritte:
a) Generieren eines Soll-Konfigurationsparametersatzes für eine Windenergieanlage (10);
b) Abspeichern des Soll-Konfigurationsparametersatzes in einer Datenbank (25);
c) automatisiertes Erfassen eines Ist-Konfigurationsparametersatzes der Windenergieanlage (10);
d) automatisiertes Vergleichen des Soll-Konfigurationsparametersatzes mit dem Ist-Konfigurationsparametersatz; und
e) Ausgeben einer Warnmeldung bei Abweichungen des Ist-Konfigurationsparametersatzes vom Soll-Konfigurationsparametersatz,
**dadurch gekennzeichnet, dass**
zum Weiterbetrieb der Windenergieanlage ohne regelmäßige Ausgabe von Warnmeldungen der Vergleich des Soll-Konfigurationsparametersatzes mit dem Ist-Konfigurationsparametersatz zeitweise mit einem abweichenden Soll-Konfigurationsparametersatz durchgeführt wird.

2. Verfahren nach Anspruch 1,
**dadurch gekennzeichnet, dass**
der Soll-Konfigurationsparametersatz aus Default-Parametern für die Windenergieanlage (10), Komponenten-Parametern für in der Windenergieanlage (3) verbaute Komponenten und Options-Parameter für den in der Windenergieanlage (3) vorgesehenen Optionen gewonnen werden.

3. Verfahren nach Anspruch 1 oder 2,
**dadurch gekennzeichnet, dass**
die Datenbank (25) einem, vorzugsweise zentralen, Server (23) zugeordnet ist und/oder der Ist-Konfigurationsparametersatz der Windenergieanlage (10) durch die Anlagensteuerung (20) oder einer Kommunikationseinheit (21) gewonnen wird.

4. Verfahren nach einem der vorhergehenden Ansprüche,
**dadurch gekennzeichnet, dass**
der Vergleich zwischen Ist- und Soll-Konfigurationsparametersatz durch die Anlagensteuerung (20), den Server (23) oder eine zusätzliche, dazu ausgebildete Vergleichskomponente durchgeführt wird.

5. Verfahren nach einem der vorhergehenden Ansprüche,
**dadurch gekennzeichnet, dass**
die Kommunikation zwischen der Anlagensteuerung der Windenergieanlage (10) und dem Server (23) über das Internet (22) erfolgt.

6. Verfahren nach einem der vorhergehenden Ansprüche,
**dadurch gekennzeichnet, dass**
der Vergleich des Soll-Parametersatzes mit dem Ist-Parametersatz in einem festgelegten Intervall und/oder nach vorgegebenen Ereignissen erfolgt.

7. Verfahren nach einem der Ansprüche 3 bis 6,
**dadurch gekennzeichnet, dass**
der Vergleich des Ist-Konfigurationsparametersatzes mit dem Soll-Konfigurationsparametersatz auf Anfrage erfolgt.

8. Verfahren nach einem der vorhergehenden Ansprüche,
**dadurch gekennzeichnet, dass**
die Ausgabe der Warnmeldung unterbunden wird.

9. Verfahren nach einem der vorhergehenden Ansprüche,
**dadurch gekennzeichnet, dass**
der Soll-Konfigurationsparametersatz über die Lebensdauer der Windenergieanlage (10) variiert wird.

10. Verfahren nach einem der vorhergehenden Ansprüche,
**dadurch gekennzeichnet, dass**
der Soll-Konfigurationsparametersatz, der Ist-Konfigurationsparametersatz und/oder die Abweichungen des Ist-Konfigurationsparametersatzes von dem Soll-Konfigurationsparametersatz über die Lebensdauer der Windenergieanlage (10) archiviert werden.

11. Anordnung zur automatischen Konfigurationsparameterkontrolle bei Windenergieanlagen umfassend einen Server (23) und wenigstens eine Windenergieanlage (10) mit einer Kommunikationseinheit (21), wobei die Kommunikationseinheit (21) zur Gewinnung von Ist-Konfigurationsparametern der Windenergieanlage (10) als Ist-Konfigurationsparametersatz ausgebildet ist, auf einer dem Server (23) zugeordneten Datenbank (25) ein Soll-Konfigurationsparametersatz für die Windenergieanlage (10) abgelegt ist und der Server (23), die Kommunikationseinheit (21) und/oder die Anlagensteuerung (20) ausgebildet ist, den Ist-Konfigurationsparametersatz automatisiert mit dem Soll-Konfigurationsparametersatz zu vergleichen und bei Abweichungen des Ist-Konfigurationsparametersatzes vom Soll-Konfigurationsparametersatz eine Warnmeldung auszugeben,
**dadurch gekennzeichnet, dass**
der Server (23), die Kommunikationseinheit (21) und/oder die Anlagensteuerung (20) weiter ausgebildet ist, zum Weiterbetrieb der Windenergieanlage ohne regelmäßige Ausgabe von Warnmeldungen den Vergleich des Soll-Konfigurationsparametersatzes mit dem Ist-Konfigurationsparametersatz zeitweise mit einem abweichenden Soll-Konfigurationsparametersatz durchzuführen..

12. Anordnung nach Anspruch 11,
**dadurch gekennzeichnet, dass**
dem Server (23) eine Datenbank (24) zugeordnet ist, wobei die Datenbank (24) Default-Parameter für die Windenergieanlage (10), Komponenten-Parameter für in der Windenergieanlage (10) verbaute Komponenten und/oder Options-Parameter für in der Windenergieanlage vorgesehene Optionen umfasst und der Server (23) dazu ausgebildet ist, aus den Default-Parametern, den Komponenten-Parametern und/oder den Options-Parametern den Soll-Konfigurationsparametersatz zu generieren.

13. Anordnung nach Anspruch 11 oder 12,
**dadurch gekennzeichnet, dass**
der Server (23), die Anlagensteuerung (20) und/oder die Kommunikationseinheit (22) zur Durchführung des Verfahrens nach einem der Ansprüche 3 bis 9 ausgebildet sind.

## Claims

1. Method for automatic configuration parameter monitoring for wind energy installations, comprising the following steps:
a) generation of a nominal configuration parameter set for a wind energy installation (10);
b) storage of the nominal configuration parameter set in a database (25);
c) automated detection of an actual configuration parameter set for the wind energy installation (10);
d) automated comparison of the nominal configuration parameter set with the actual configuration parameter set; and
e) output of a warning message in the event of discrepancies between the actual configuration parameter set and the nominal configuration parameter set,
**characterized in that**,
in order to continue to operate the wind energy installation without regular output of warning messages, the comparison of the nominal configuration parameter set with the actual configuration parameter set is carried out at times using a discrepant nominal configuration parameter set.

2. Method according to Claim 1,
**characterized in that**
the nominal configuration parameter set is obtained from default parameters for the wind energy installation (10), component parameters for components installed in the wind energy installation (3), and option parameters for the options provided in the wind energy installation (3).

3. Method according to Claim 1 or 2,
**characterized in that**
the database (25) is associated with a, preferably central, server (23), and/or the actual configuration parameter set for the wind energy installation (10) is obtained by the installation control system (20) or a communication unit (21).

4. Method according to one of the preceding claims,
**characterized in that**
the comparison between the actual and the nominal configuration parameter set is carried out by the installation control system (20), the server (23) or an additional comparison component designed for this purpose.

5. Method according to one of the preceding claims,
**characterized in that**
the communication between the installation control system for the wind energy installation (10) and the server (23) takes place via the Internet (22).

6. Method according to one of the preceding claims,
**characterized in that**
the comparison of the nominal parameter set with the actual parameter set is carried out at a fixed interval and/or after predetermined events.

7. Method according to one of Claims 3 to 6,
**characterized in that**
the comparison of the actual configuration parameter set with the nominal configuration parameter set is carried out on request.

8. Method according to one of the preceding claims,
**characterized in that**
the output of the warning message is suppressed.

9. Method according to one of the preceding claims,
**characterized in that**
the nominal configuration parameter set is varied over the life of the wind energy installation (10).

10. Method according to one of the preceding claims,
**characterized in that**
the nominal configuration parameter set, the actual configuration parameter set and/or the discrepancies between the actual configuration parameter set and the nominal configuration parameter set are archived over the life of the wind energy installation (10).

11. Arrangement for automatic configuration parameter monitoring for wind energy installations comprising a server (23) and at least one wind energy installation (10) having a communication unit (21), wherein the communication unit (21) is designed to obtain actual configuration parameters for the wind energy installation (10) as an actual configuration parameter set, a nominal configuration parameter set for the wind energy installation (10) is stored in a database (25) associated with the server (23), and the server (23), the communication unit (21) and/or the installation control system (20) is designed to automatically compare the actual configuration parameter set with the nominal configuration parameter set, and to output a warning message in the event of discrepancies between the actual configuration parameter set and the nominal configuration parameter set,
**characterized in that**
the server (23), the communication unit (21) and/or the installation control system (20) is also designed, in order to continue to operate the wind energy installation without regular output of warning messages, to perform the comparison of the nominal configuration parameter set with the actual configuration parameter set at times using a discrepant nominal configuration parameter set.

12. Arrangement according to Claim 11,
**characterized in that**
the server (23) is associated with a database (24), wherein the database (24) comprises default parameters for the wind energy installation (10), component parameters for components installed in the wind energy installation (10), and/or option parameters for options provided in the wind energy installation, and the server (23) is designed to generate the nominal configuration parameter set from the default parameters, the component parameters and/or the option parameters.

13. Arrangement according to Claim 11 or 12,
**characterized in that**
the server (23), the installation control system (20) and/or the communication unit (22) are designed to carry out the method according to one of Claims 3 to 9.

## Revendications

1. Procédé destiné au contrôle automatique de paramètres de configuration pour des installations éoliennes, comprenant les étapes consistant à :
a) générer un jeu de paramètres de configuration théoriques pour une installation éolienne (10) ;
b) enregistrer le jeu de paramètres de configuration théoriques dans une base de données (25) ;
c) détecter automatiquement un jeu de paramètres de configuration réels de l'installation éolienne (10) ;
d) comparer automatiquement le jeu de paramètres de configuration théoriques avec le jeu de paramètres de configuration réels ; et
e) sortir un avertissement en cas de divergences entre le jeu de paramètres de configuration réels et le jeu de paramètres de configuration théoriques,
**caractérisé en ce que** la comparaison du jeu de paramètres de configuration théoriques avec le jeu de paramètres de configuration réels est effectuée temporairement avec un jeu de paramètres de configuration théoriques divergent afin de poursuivre le fonctionnement de l'installation éolienne sans sortir régulièrement des avertissements.

2. Procédé selon la revendication 1, **caractérisé en ce que** le jeu de paramètres de configuration théoriques est obtenu à partir de paramètres par défaut pour l'installation éolienne (10), de paramètres de composants pour des composants installés dans l'installation éolienne (3) et de paramètres d'options pour les options prévues dans l'installation éolienne (3).

3. Procédé selon la revendication 1 ou 2, **caractérisé en ce que** la base de données (25) est associée à un serveur (23) de préférence central, et/ou **en ce que** le jeu de paramètres de configuration réels de l'installation éolienne (10) est obtenu par le système de commande d'installation (20) ou une unité de communication (21).

4. Procédé selon l'une quelconque des revendications précédentes, **caractérisé en ce que** la comparaison entre le jeu de paramètres de configuration réels et théoriques est effectuée par le système de commande d'installation (20), le serveur (23) ou un composant de comparaison supplémentaire, réalisé à cet effet.

5. Procédé selon l'une quelconque des revendications précédentes, **caractérisé en ce que** la communication entre le système de commande d'installation de l'installation éolienne (10) et le serveur (23) passe par internet (22).

6. Procédé selon l'une quelconque des revendications précédentes, **caractérisé en ce que** la comparaison du jeu de paramètres théoriques avec le jeu de paramètres réels est effectuée selon un intervalle fixe et/ou selon des événements prédéfinis.

7. Procédé selon l'une quelconque des revendications 3 à 6, **caractérisé en ce que** la comparaison du jeu de paramètres de configuration réels avec le jeu de paramètres de configuration théoriques est effectuée à la demande.

8. Procédé selon l'une quelconque des revendications précédentes, **caractérisé en ce que** la sortie de l'avertissement est empêchée.

9. Procédé selon l'une quelconque des revendications précédentes, **caractérisé en ce que** le jeu de paramètres de configuration théoriques est amené à varier pendant la durée de vie de l'installation éolienne (10).

10. Procédé selon l'une quelconque des revendications précédentes, **caractérisé en ce que** le jeu de paramètres de configuration théoriques, le jeu de paramètres de configuration réels et/ou les divergences du jeu de paramètres de configuration théoriques par rapport au jeu de paramètres de configuration réels sont archivés pendant la durée de vie de l'installation éolienne (10).

11. Agencement destiné au contrôle automatique de paramètres de configuration pour des installations éoliennes, comprenant un serveur (23) et au moins une installation éolienne (10) dotée d'une unité de communication (21), dans lequel l'unité de communication (21) est réalisée pour obtenir des paramètres de configuration réels de l'installation éolienne (10) sous la forme d'un jeu de paramètres de configuration réels, un jeu de paramètres de configuration théoriques pour l'installation éolienne (10) est enregistré dans une base de données (25) associée au serveur (23), et le serveur (23), l'unité de communication (21) et/ou le système de commande d'installation (20) sont réalisés pour comparer de manière automatisée le jeu de paramètres de configuration réels avec le jeu de paramètres de configuration théoriques, et pour sortir un avertissement en cas de divergences entre le jeu de paramètres de configuration réels et le jeu de paramètres de configuration théoriques,
**caractérisé en ce que** le serveur (23), l'unité de communication (21) et/ou le système de commande d'installation (20) sont réalisés en outre pour effectuer la comparaison du jeu de paramètres de configuration théoriques avec le jeu de paramètres de configuration réels temporairement avec un jeu de paramètres de configuration réels divergent afin de continuer à faire fonctionner l'installation éolienne sans sortir régulièrement des avertissements.

12. Agencement selon la revendication 11, **caractérisé en ce que** le serveur (23) est associé à une base de données (24), dans lequel la base de données (24) comprend des paramètres par défaut pour l'installation éolienne (10), des paramètres de composant pour des composants installés sur l'installation éolienne (10), et/ou des paramètres d'option pour les options prévues dans l'installation éolienne, et le serveur (23) est réalisé pour générer le jeu de paramètres de configuration théoriques à partir des paramètres par défaut, des paramètres de composants et/ou des paramètres d'option.

13. Agencement selon la revendication 11 ou 12, **caractérisé en ce que** le serveur (23), le système de commande d'installation (20) et/ou l'unité de communication (22) sont réalisés pour exécuter le procédé selon l'une quelconque des revendications 3 à 9.
